# EUROPÄISCHE PATENTANMELDUNG

(11) **EP 1 475 206 A1**
(43) Veröffentlichungstag der Anmeldung: **10.11.2004**
(21) Anmeldenummer: 04008378.4
(22) Anmeldetag: 06.04.2004
(51) Int. Cl.: B29C 35/06, F16L 11/04

(54) **Verfahren zur Herstellung von vulkanisierten Schläuchen**

(30) Priorität: 06.05.2003 DE 10320130
(71) Anmelder: VERITAS AG, 63571 Gelnhausen (DE)
(72) Erfinder: Hendil-Forssel, Claes, 63589 Linsengericht 1 (DE); van Hooren, Marc, 63579 Freigericht-Bernbach (DE); Schmidt, Detlef, 63628 Bad Soden-Salmünster (DE)
(74) Vertreter: Grünecker, Kinkeldey, Stockmair & Schwanhäusser Anwaltssozietät

(57) **Zusammenfassung**

Die Erfindung bezieht sich auf ein Verfahren zur Herstellung von wenigstens ein elastomeres Material aufweisenden Schläuchen.

Vorteilhafterweise kann das erfindungsgemäße Verfahren folgende Schritte umfassen: Extrudieren eines Schlauches, Befüllen einer Vulkanisiervorrichtung mit einer Flüssigkeit, Einführen des extrudierten Schlauches in die Vulkanisiervorrichtung, Vulkanisieren des extrudierten Schlauches, Entnehmen des Schlauches aus der Vorrichtung. Besonders bevorzugt wird hierbei als Flüssigkeit Wasser eingesetzt.

Es hat sich gezeigt, dass die Durchführung der Vulkanisation in einer Flüssigkeit zu einer Stabilisierung der äußeren Form des Schlauches führt und so ein Schlauch mit der gewünschten Form einfach und preiswert hergestellt werden kann. Insbesondere ist hierbei zu berücksichtigen, dass auf den bisher zumeist unverzichtbaren Dorn im Schlauchinneren verzichtet werden kann.

## Beschreibung

Die vorliegende Erfindung betrifft ein Verfahren zur Herstellung von wenigstens ein elastomeres Material aufweisenden Schläuchen.

Zur Herstellung von Schläuchen aus elastomeren Materialien gibt es verschiedenste Verfahren. Zumeist wird ein Schlauchrohling auf einen Kunststoffdorn extrudiert und der Schlauchrohling zusammen mit dem im Inneren des Schlauches befindlichen Kunststoffdorn auf eine bestimmte Länge geschnitten. Anschließend wird der Rohling mit dem im Inneren befindlichen Kunststoffdom in eine Negativform eingelegt und der Schlauch zusammen mit dem Dorn in der Negativform vulkanisiert wird. Nach Abschluss der Vulkanisation wird der Dorn entfernt. Bei den verwendeten Domen handelt es sich häufig um solche mit einem Kunststoffvollprofil, die entweder weggeworfen oder im Idealfall recycelt werden. Der Dorn ist bei diesem Verfahren notwendig, um sicherzustellen, dass der Schlauchrohling der vor dem Vulkanisieren noch sehr empfindlich ist, seine Form während des Vulkanisiervorganges beibehält.

Ein weiteres Verfahren sieht vor die extrudierten Schläuche vor der Vulkanisation im Autoklaven mit Wickelbandagen zu umwickeln, um einen möglichst hohen Anfangsdruck in der Schlauchwand zu erzeugen, den Schlauchkörper rund zu halten um eine mehr oder weniger griffige Oberfläche zu erzeugen. Nach der Vulkanisation wird die Bandage abgewickelt und neu verwendet. Hierbei soll durch die Bandage eine Stabilisierung der Form des Schlauchrohlings erzielt werden. Dieses Verfahren ist sehr aufwendig, insbesondere durch die zeitaufwendigen Wickelvorgänge.

Die beschriebenen Verfahren, Dorn einerseits und Wickelbandagen andererseits, dienen jeweils der Stabilisierung der Form des im unvulkanisierten Zustand instabilen Materials.

Der Erfindung liegt die Aufgabe zugrunde ein Verfahren zur Herstellung eines Schlauches der eingangs genannten Art zur Verfügung zustellen, das ohne einen Dorn im Schlauchrohling während der Vulkanisation zu Formgebung auskommt und das einfach und preiswert in der Durchführung ist.

Die Aufgabe wird bei einem Verfahren zur Herstellung von wenigstens ein elastomeres Material aufweisenden Schläuchen dadurch gekennzeichnet, dass das Vulkanisieren in einem Flüssigkeitsbad durchgeführt wird.

Es hat sich gezeigt, dass die Durchführung der Vulkanisation in einer Flüssigkeit zu einer Stabilisierung der äußeren Form des Schlauches führt und so ein Schlauch mit der gewünschten Form einfach und preiswert hergestellt werden kann. Insbesondere ist hierbei zu berücksichtigen, dass auf den bisher zumeist unverzichtbaren Dorn im Schlauchinneren verzichtet werden kann.

Gemäß einer bevorzugten Ausführungsform kann sich während des Vulkanisierens an der Außenseite eine Flüssigkeit und an der Innenseite des Schlauches ein Fluid befinden. Hierdurch kann im Inneren des Schlauches ein Gegendruck erzeugt werden, der sich wiederum vorteilhaft auf die Schlauchform auswirkt.

Von Vorteil kann es sein, wenn die beiden Schlauchenden oberhalb der Oberfläche der Flüssigkeit enden. Dadurch kann auf einfache Weise sichergestellt werden, dass keine Flüssigkeit in das Schlauchinnere eintritt.

Vorteilhafterweise kann hierbei sich die Flüssigkeit an der Außenseite und das Fluid an der Innenseite des Schlauches unterscheiden. Hierbei ist besonders bevorzugt, wenn sich der Druck an der Innenseite des Schlauches von dem Druck an der Außenseite unterscheidet. Auf diese Weise kann gezielt ein die Form des Schlauches stabilisierender Druck und Gegendruck auf die innere und äußere Schlauchwandung ausgeübt werden.

Gemäß einer besonders bevorzugten Ausführungsform kann das Vulkanisieren in Wasser durchgeführt werden und dass das Wasser in Kontakt mit der Außenseite des Schlauches stehen. Da es sich bei Wasser um ein sehr preiswertes Material handelt, werden hierdurch auch die Herstellungskosten gesenkt. Gleichermaßen entfallen bei dem Einsatz von Wasser Entsorgungskosten, wie auch zusätzliche Sicherheitsmaßnahmen die unter Umständen bei dem Einsatz gefährlicherer Substanzen notwendig werden.

Gemäß einer anderen bevorzugten Ausführungsform kann als Fluid im Inneren des Schlauches ein Gas eingefüllt werden. Durch ein Gas kann hier gezielt das gewünscht Druckverhältnis zwischen dem Schlauchinneren und dem Schlauchäußerem erzielt werden.

Vorteilhafterweise kann als Fluid im Inneren des Schlauches Luft eingefüllt werden. hierbei handelt es sich einerseits um ein sehr billiges gas, das sich daher vorteilhaft auf die Herstellungskosten auswirkt, gleichzeitig müssen keine besonderen Vorkehrungen zum Umgang mit diesem Material getroffen werden.

Gemäß einer weiteren bevorzugten Ausführungsform kann ein einlagiger Schlauch hergestellt werden.

Ferner kann der Schlauch bevorzugt AEM enthalten. Dieses Material hat eine gute ÖI- und Temperaturbeständigkeit und hat sich in der Praxis als besonders geeignet, insbesondere zur Verwendung als Maschinenschlauch, herausgestellt.

Vorteilhafterweise kann das erfindungsgemäße Verfahren folgende Schritte umfassen: Extrudieren eines Schlauches, Befüllen der Vulkanisiervorrichtung mit einer Flüssigkeit, Einführen des extrudierten Schlauches in eine Vulkanisiervorrichtung, Vulkanisieren des extrudierten Schlauches, Entnehmen des Schlauches aus der Vorrichtung. Besonders bevorzugt wird hierbei als Flüssigkeit Wasser eingesetzt.

Diese Abfolge der einzelnen Schritte hat sich in der Praxis als besonders geeignet erwiesen. Da das Wasser erst nach dem Schlauch in den Behälter eingeführt wird, kann der Schlauch problemlos in der gewünschten Form eingelegt werden. Gleichzeitig dringt das Wasser gut in alle Bereiche zwischen den Schlauchwandungen und füllt den Behälter Hohlraumfrei aus. Von Vorteil kann es zudem sein, wenn der Schlauch nach dem Herausnehmen aus der Vulkanisiervorrichtung zugeschnitten wird, um die Maßhaltigkeit zu verbessern. Um die gewünschten Festigkeitseigenschaften zu erzielen, kann der Schlauch getempert werden. Hierbei kann es sich als besonders vorteilhaft erwiesen, wenn der Schlauch bereits vor dem Tempern auf die gewünschte Länge zugeschnitten wird. Hierdurch wird die Handhabbarkeit des Schlauches deutlich erhöht, da nur Schlauchabschnitte weiterverarbeitet werden.

Von Vorteil kann es dabei sein, wenn das Befüllen der Vulkanisiereinheit vor dem Einführen des Schlauches in die Vulkanisiereinrichtung erfolgt. Dies lässt sich im Allgemeinen leichter durchführen, als wenn das Befüllen erst nach dem Einführen in die Vulkanisiereinrichtung erfolgt.

Gemäß einer bevorzugten Ausführungsform kann als Vulkanisiervorrichtung ein Behälter, vorzugsweise ein kreisförmigen Behälter, mit hohen Wänden eingesetzt werden. Vorteilhafterweise kann hierbei die Wandhöhe des Behälters 5 bis 15 cm, vorzugsweise 8 bis 12 cm, betragen. Ein kreisförmiger Behälter hat sich in der Praxis bewährt, da der Schlauch leicht eingelegt werden kann, bei gleichzeitiger guter Raumausnutzung. Durch die höheren Wände kann eine größere Länge des Schlauches zu einem Zeitpunkt vulkanisiert werden.

Gemäß einer weiteren bevorzugten Ausführungsform kann der Schlauch spiralförmig in den Behälter eingelegt werden. Auf diese Weise ist es möglich den in dem Behälter vorhanden Raum besonders gut auszunutzen. Gleichzeitig werden Beschädigungen des Schlauches während des Einlegens vermieden.

Vorteilhafterweise kann das Wasser aus dem Behälter vor dem Herausnehmen des Schlauches entfernt werden. Hierdurch kann zum einen verhindert werden, dass noch zu einem späteren Zeitpunkt Wasser in das Schlauchinnere eindringt, gleichzeitig wird die Handhabbarkeit des Behälters sowie des Schlauches verbessert.

Gemäß einer weiteren bevorzugten Ausführungsform kann der Schlauch während des Schrittes des Temperns auf einen Träger gelegt werden. Hierbei kann als Träger Backpapier eingesetzt werden. Dieses Material Verbindet sich nicht mit dem Schlauch, so dass dieser einfach von dem Trägermaterial entfernt werden kann, zudem kann auch das Trägermaterial, im Falle einer Alterung einfach und problemlos entsorgt werden, so dass keine Zusatzkosten anfallen.

Die vorliegende Erfindung wird im folgenden anhand eines nichtbeschränkenden Ausführungsbeispieles sowie einer Zeichnung näher erläutert. Es zeigt:

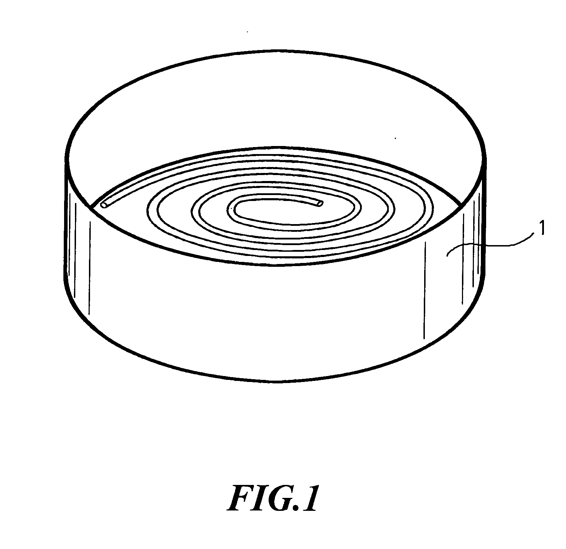

- Fig.1: einen Vulkanisierbehälter mit eingelegtem Schlauch.

Ein Schlauch wird auf bekannte Weise mit den gewünschten Durchmesser und Wandstärke und mit einer vorbestimmten Länge extrudiert. Der solchermaßen hergestellte Schlauch wird nachfolgend in einen in Figur 1 dargestellten sauberen Behälter gelegt.

Der Behälter 1 ist hierbei als ein kreisförmig ausgebildeter Deckel ausgestaltet und weist relativ hohe Seitenwände auf. Bei dem dargestellten Beispiel beträgt die Höhe der Seitenwände 10 cm.

Der Schlauch wird spiralförmig in den Behälter eingelegt, so dass der das Volumen des Behälters gut ausgenutzt wird. Anschließend wird der Behälter mit Wasser aufgefüllt, so dass der Schlauch von Außen mit dem Wasser in Kontakt steht. Im Schlauchinneren befindet sich Luft. In diesem Zusammenhang sind Mittel vorgesehen um ein Eindringen des Wasser in den Schlauch auszuschließen.

Der sich in dem befüllten Behälter befindende Schlauch wird vulkanisiert, d.h. dier Vulkanisationsprozeß wird im Wasserbad durchgeführt. Nach Beendigung dis Vulkanisierens wird das Wasser aus dem Behälter entfernt, z. B. durch Abschütten, Absaugen oder dergleichen und der Schlauch entnommen.

Der durch das Vulkanisieren nunmehr formstabile Schlauch wird zu Stücken mit der gewünschten Länge geschnitten. Die einzelnen Schlauchstücke werden anschließend nebeneinander auf einen Träger gelegt und auf bekannte Weise getempert. Als Trägermaterial hat sich in diesem Zusammenhang Backpapier besonders bewährt.

## Patentansprüche

1. Verfahren zur Herstellung von wenigstens ein elastomeres Material aufweisenden Schläuchen
**dadurch gekennzeichnet, dass**
das Vulkanisieren in einem Flüssigkeitsbad durchgeführt wird.

2. Verfahren nach Anspruch 1, **dadurch gekennzeichnet, dass** sich während des Vulkanisierens an der Außenseite des Schlauches eine Flüssigkeit und an der Innenseite des Schlauches ein Fluid befindet.

3. Verfahren nach Anspruch 1 oder 2, **dadurch gekennzeichnet, dass** die beiden Schlauchenden oberhalb der Oberfläche der Flüssigkeit enden.

4. Verfahren nach Anspruch 2 oder 3, **dadurch gekennzeichnet, dass** sich die Flüssigkeit an der Außenseite von dem Fluid an der Innenseite des Schlauches unterscheidet.

5. Verfahren nach einem der Ansprüche 1 bis 4, **dadurch gekennzeichnet, dass** sich der Druck an der Innenseite des Schlauches von dem Druck an der Außenseite unterscheidet.

6. Verfahren nach einem der Ansprüche 1 bis 5, **dadurch gekennzeichnet, dass** das Vulkanisieren in Wasser durchgeführt wird und dass das Wasser in Kontakt mit der Außenseite des Schlauches steht.

7. Verfahren nach einem der Ansprüche 2 bis 6, **dadurch gekennzeichnet, dass** als Fluid im Inneren des Schlauches ein Gas eingefüllt wird.

8. Verfahren nach Anspruch 7, **dadurch gekennzeichnet, dass** als Fluid im Inneren des Schlauches Luft eingefüllt wird.

9. Verfahren nach einem der Ansprüche 1 bis 8, **dadurch gekennzeichnet, dass** ein einlagiger Schlauch hergestellt wird.

10. Verfahren nach einem der Ansprüche 1 bis 9, **dadurch gekennzeichnet, dass** der Schlauch AEM enthält.

11. Verfahren nach einem der Ansprüche 1 bis 10, **gekennzeichnet durch** folgende Schritte:
Extrudieren eines Schlauches,
Befüllen der Vulkanisiervorrichtung mit einer Flüssigkeit,
Einführen des extrudierten Schlauches in eine Vulkanisiervorrichtung, Vulkanisieren des extrudierten Schlauches in der Flüssigkeit und
Entnehmen des Schlauches aus der Vorrichtung.

12. Verfahren nach Anspruch 11, **dadurch gekennzeichnet, dass** nach dem Entnehmen des Schlauches der Schlauch zugeschnitten wird.

13. Verfahren nach Anspruch 11 oder 12, **dadurch gekennzeichnet, dass** der Schlauch getempert wird.

14. Verfahren nach Anspruch 13, **dadurch gekennzeichnet, dass** der Schlauch nach dem Zuschneiden getempert wird.

15. Verfahren nach einem der Ansprüche 11 bis 14, **dadurch gekennzeichnet, dass** das Befüllen der Vulkanisiereinheit vor dem Einführen des Schlauchs in die Vulkanisiereinrichtung erfolgt.

16. Verfahren nach einem der Ansprüche 11 bis 15, **dadurch gekennzeichnet, dass** als Flüssigkeit Wasser verwendet wird.

17. Verfahren nach einem der Ansprüche 11 bis 16, **dadurch gekennzeichnet, dass** als Vulkanisiervorrichtung ein Behälter, vorzugsweise kreisförmigen Behälter, mit hohen Wänden eingesetzt wird.

18. Verfahren nach Anspruch 17, **dadurch gekennzeichnet, dass** die Wandhöhe des Behälters 5 bis 15 cm, vorzugsweise 8 bis 12 cm, beträgt.

19. Verfahren nach einem der Ansprüche 17 oder 18, **dadurch gekennzeichnet, dass** der Behälter als Deckel ausgebildet ist.

20. Verfahren nach einem der Ansprüche 17 bis 19, **dadurch gekennzeichnet, dass** der Schlauch spiralförmig in den Behälter eingelegt wird.

21. Verfahren nach einem der Ansprüche 17 bis 20, **dadurch gekennzeichnet, dass** das Wasser aus dem Behälter vor dem Herausnehmen des Schlauches entfernt wird.

22. Verfahren nach einem der Ansprüche 13 bis 19, **dadurch gekennzeichnet, dass** der Schlauch während des Schrittes des Temperns auf einen Träger gelegt wird.

23. Verfahren nach Anspruch 22, **dadurch gekennzeichnet, dass** als Träger Backpapier eingesetzt wird.
